# EUROPEAN PATENT SPECIFICATION

(11) **EP 2 381 618 B1**
(45) Date of publication and mention of the grant of the patent: **23.03.2016**
(21) Application number: 09848408.2
(22) Date of filing: 14.12.2009
(51) Int. Cl.: H04L 12/24, H04L 1/22, H04M 3/22, H04M 3/51, H04M 3/42

(54) **UPGRADING METHOD AND SYSTEM FOR COMPUTER TELECOMMUNICATION INTEGRATED DEVICE**
AUFRÜSTUNGSVERFAHREN UND SYSTEM FÜR INTEGRIERTES COMPUTERTELEKOMMUNIKATIONSGERÄT
MÉTHODE ET SYSTÈME DE MISE À NIVEAU D'UN DISPOSITIF CTI

(30) Priority: 20.08.2009 CN 200910167505
(43) Date of publication of application: 26.10.2011
(73) Proprietor: ZTE Corporation, Shenzhen, Guangdong 518057 (CN)
(72) Inventor: FAN, Zhanhua, Guangdong 518057 (CN)
(74) Representative: Novagraaf Technologies
(86) International application number: PCT/CN2009/075556
(87) International publication number: WO 2011/020267

(56) References cited:
- CN-A- 101 217 353
- CN-A- 101 227 632
- DE-A1- 10 161 948
- US-A- 5 901 214
- US-A1- 2005 141 692
- US-A1- 2006 209 797

## Description

### Field of the Invention

The present invention relates to the communication field, and in particular to a method and a system for upgrading a Computer Telecommunication Integration equipment.

### Background of the Invention

A call center, also known as a customer service center, is an integrated information service system based on computer communication integration technology, taking full advantage of the integration of a plurality of functions of computer network and communication network, and integrated with enterprise(s), and is a special system used to contact with a user via calling processing and called processing centralizedly performed by a group of agents or business representatives of a company. The call center is used to provide to the user a plurality of services such as calls, faxes, and emails, and is mainly used to deal with requirements, questions, complaints, suggestions and inquiries from users to the company, for example, customer service center telephone 10000 of a telecommunication enterprise, customer service center telephone 95555 of a financial firm, and so on.

With the rapid development of software technology and marketing demands, softwares are upgraded more and more frequently. Also, there is no exception to the upgrade of a computer telecommunication integration (CTI) equipment in a next generation call center (NGCC). Software or hardware of the CTI equipment is required to be upgraded under the pressure of the enhancement of function requirement, the expansion of agent capability, the amendment of software malfunction, the improvement of hardware performance and so on. Currently, the upgrade of the CTI equipment is achieved mainly by means of shutting down an old equipment and replacing it with a new one; even though a master-slave redundant dual-machine architecture is used, a mode of a floating IP is always used, i.e., only one CTI server is operated at the same time; which inevitably leads to a downtime during which the CTI equipment is disabled, if a agent is ringing or in a communication state (i.e., in a non-idle state) at this moment, its state will change to an idle state after the agent logs in again, which will inevitably result in that the call cannot be connected. Accordingly, the service quality of customers will be decreased.

D1 (US2006/209797) provides respective technical solutions; however, the above mentioned problem still remains unsolved.

### Summary of the Invention

One aspect of the present invention is proposed for the problems in the related art that only one CTI server is operated at the same time when a CTI equipment is upgraded, and a call cannot be connected when an agent is in a non-idle state, therefore, one aspect of the present invention is to provide a method and a system for upgrading a computer telecommunication integration equipment to solve at least one of the above problems.

According to one aspect of the present invention, a method for upgrading a computer telecommunication integration equipment is provided.

The method for upgrading a computer telecommunication integration equipment according to the present invention comprises: a master computer telecommunication integration (CTI) equipment and a slave CTI equipment registering respectively to an automatic call distributor; when the master CTI equipment is upgraded, one or more agents which are in an idle state logging out from the master CTI equipment, and logging in the slave CTI equipment which has been upgraded; and one or more agent which are in a non-idle state keeping connected with the master CTI equipment, logging out from the master CTI equipment after changing to the idle state, and logging in the slave CTI equipment which has been upgraded.

According to another aspect of the present invention, a system for upgrading a computer integration equipment is provided.

When the computer telecommunication integration equipment is upgraded, the system for upgrading a computer integration equipment according to the present invention comprises: a master CTI equipment, configured to keep connected with one or more agents which are in a non-idle state, and disconnect with the one or more agents in a case that the one or more agents are in an idle state; a slave CTI equipment, configured to establish connections with the one or more agents in the case that the one or more agents are in the idle state; and an automatic call distributor, configured to connect a new incoming call to one or more agents connected with the slave CTI equipment, wherein the slave CTI equipment has been upgraded.

By means of one aspect of the present invention, when the CTI equipment is upgraded, the connection between a first CTI equipment connects and one or more agents which are in the non-idle state is kept; and when the one or more agents are in the idle state, the connection between the first CTI equipment and the one or more agents is disconnected, and the connection between the one or more agents and an upgraded second CTI equipment is established. In this way, problems of the related art can be solved, i.e., only one CTI server is running at the same time when CTI equipment is upgraded, and the call cannot be connected when an agent is in a non-idle state, so that user calls or communication will not be affected when the CTI equipment is upgraded, therefore the service quality of customer is improved.

Other features and advantages of one aspect of the present invention will be described in the following description and partly become obvious from the description, or be understood by implementing one aspect of the present invention. The objects and other advantages of one aspect of the present invention can be realized and obtained through the structures indicated by the description, claims and drawings.

### Brief Description of the Drawings

Drawings, provided for further understanding of the present invention and forming a part of the specification, are used to explain the present invention together with embodiments of the present invention rather than to limit the present invention, wherein:
Fig. 1 is an architecture diagram of a system during a normal operation process according to an embodiment of the present invention;
Fig.2 is a flow chart of a method for upgrading a computer telecommunication integration equipment according to an embodiment of the present invention;
Fig.3 is a flow chart of logging-in by an agent according to a preferred embodiment of the present invention;
Fig.4 is a flow chart of the upgrade of the computer telecommunication integration equipment when the agent is in an idle state according to a preferred embodiment of the present invention;
Fig.5 is a flow chart of the upgrade of the computer telecommunication integration equipment when the agent is in a non-idle state according to a preferred embodiment of the present invention;
Fig.6 is a block diagram of a system for upgrading a computer integration equipment according to an embodiment of the present invention; and
Fig.7 is a block diagram of a system for upgrading the computer integration equipment according to a preferred embodiment of the present invention.

### Detailed Description of the Embodiments

The embodiments of the present invention provide a solution for upgrading a computer integration equipment in consideration of the problems in the related art that only one CTI server is operated at the same time when a CTI equipment is upgraded, and a call cannot be connected when an agent is in a non-idle state.

Master-slave redundant dual-CTI equipments are configured in an NGCC system (wherein the two CTI equipments can be two different servers or different software modules in a same server, as long as their IP addresses or port numbers differ from each other), wherein a CTI equipment started first is a master machine, while a CTI equipment started later is a slave machine, the two CTI equipments transmit state detection messages to each other every a definite time after being started up. Then, they register to an automatic call distribution module (i.e., an automatic call distributor), wherein registration messages contains the state of master or slave of the CTI equipments.

Under a normal situation, only the master CTI is required to be operated, and all the agents, log in (i.e., enroll) the master CTI equipment. The slave CTI equipment does not function, thus it can run or be shut down.

Two IP addresses for the master-slave CTI equipments are configured by the agents, thus an agent can choose any one of the IP addresses to log in when logging in the CTI equipments, wherein if a response is not received from the CTI equipments, the agent chooses to log in the CTI with the other IP address. Since only the master CTI equipment can receive a logging-in request of the agent, the agent can always log in the master CTI equipment.

When an upgrade is required, the slave CTI equipment is upgraded to a new version; and after starting up the CTI equipment normally, a maintenance staff sends a master-slave switching instruction at either side of the master and slave CTI equipments. The original slave CTI equipment (CTI2) is changed to be the master CTI equipment immediately, however, the original master CTI equipment (CTI1) does not be changed into the slave state at once but into a "master-to-slave" state, and informs the automatic call distributor of the state. Then the CTI1 transmits a master-slave switching message to all the agents which are in an idle state; the agents which are in communication can continue subsequent operations as usual; and CTI1 will not send the master-slave switching message to these agents until they have finished their conversation and turned into the idle state. After receiving the master-slave switching message, the agents automatically log out from the CTI equipment at which they are currently located, and log in the other CTI equipment.

When receiving a user calling for a manual service, the automatic call distributor will transmit a request message to the master CTI equipment, and then select an agent in the master CTI equipment. The process of a calling control message (message such as ringing, conversation and so on) makes no distinction between the master CTI equipment and the slave CTI equipment, and the message will be sent to the CTI equipment to which the agent corresponding to the message belongs.

Since the CTI1 in the "master-to-slave" state does not accept the logging-in of the agent, the number of on-line agents of the CTI1 continues to decrease until all the agents have logged out from CTI1 equipment, and the state of the CTI1 equipment switches to the slave state at this moment. All the agents originally logged in the CTI1 have logged in the new CTI equipment (i.e., CTI2), thus the upgrade of the CTI equipment is completed. Then the CTI1 can be quitted from the operation and be changed to a new version.

It should be noted that the embodiments of the present invention and the characteristics of the embodiments can be combined with each other in case that there is no conflict. The present invention will be described in details in connection with drawings and embodiments hereinafter.

### Method Embodiments

A method for upgrading a computer integration equipment is provided according to an embodiment of the present invention.

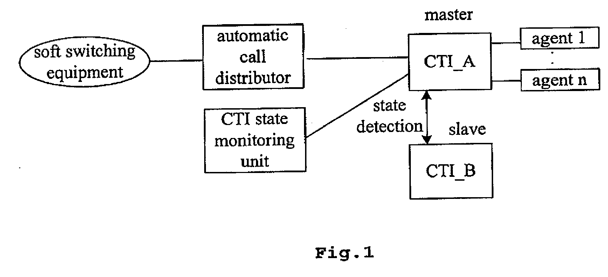

First of all, the solution of the present invention will be described in connection with Fig.1, in order to introduce it clearly. Fig.1 is an architecture view of a system during a normal operation according to an embodiment of the present invention. As shown in Fig.1, the system during the normal operation according to the embodiment of the present invention comprises: a soft switching equipment, an automatic call distributor, a CTI state monitoring unit, a CTI_A equipment (i.e., a master CTI), a CTI_B equipment (i.e., a slave CTI) and agent 1 to agent n connected to the CTI_A.

In the above, the soft switching equipment is configured to perform a number analyzing on a user calling access code, so as to select different automatic call distributors.

The automatic call distributor, connected with the soft switching equipment, is configured to distribute a call to an automatic voice service or a manual service, and control a calling continual connection.

The CTI equipments, connected respectively with one or more agents, are configured to select agents which are in an idle state according to a calling routing request sent by the automatic call distributor, control the states of the agents, and realize the delivery of call control messages between the agents and the automatic call distributor. Each of CTI equipments may have five operation states, i. e., a master state, a slave state, a master-to-slave state, an independent operation state and an unused state. After being started up, each of the two CTI equipments regularly detects the state of each other, wherein if only one equipment is running, the running equipment is in the independent operation state, and the other equipment is in the unused state. If the two equipments are running at the same time, the equipment started early is in the master state, and the other is in the slave state. The only difference between the master state and the independent operation state lies in that a master-slave switching instruction can not be accepted under the independent operation state. The master-to-slave state is an intermediate state between the master state and the slave state. Preferably, the above two CTI equipments can be two different servers with different IP addresses and a same port, or be different software modules in a same server with a same IP address and different ports.

The CTI state monitoring unit can be connected to any running CTI equipment of the CTI_A equipment (the master CTI) and the CTI_B equipment (the slave CTI), display the state of the master or the slave of the two CTI equipments graphically, and control the master-slave switching between the two CTI equipments.

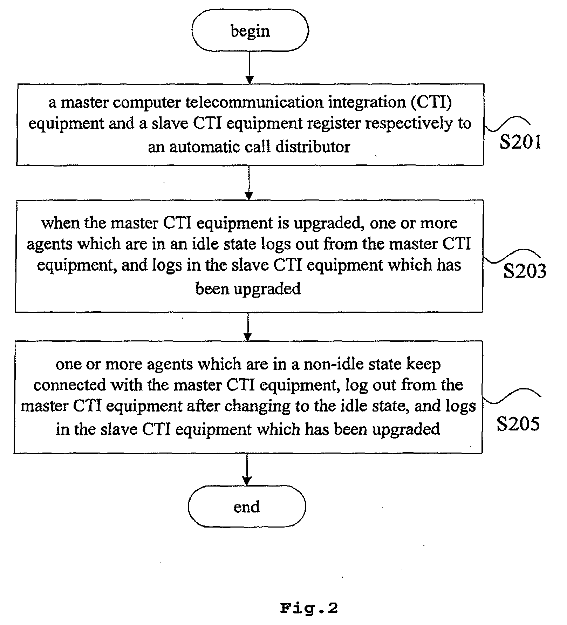

Fig.2 is a flow chart of a method for upgrading a computer telecommunication integration equipment according to an embodiment of the present invention. As shown in Fig.2, the method for upgrading the computer telecommunication integration equipment according to the embodiment of the present invention comprises the following processes (Step S201 to Step S205).

Step S201, a master CTI equipment and a slave CTI equipment register respectively to an automatic call distributor.

Preferably, at least one of IP addresses and port numbers included in the master CTI equipment and the slave CTI equipment differs from each other, i. e., the master CTI equipment and the slave CTI equipment have a same IP address and different port numbers; or the master CTI equipment and the slave CTI equipment have different IP addresses and a same port number; or the master CTI equipment and the slave CTI equipment have different IP addresses and different port numbers.

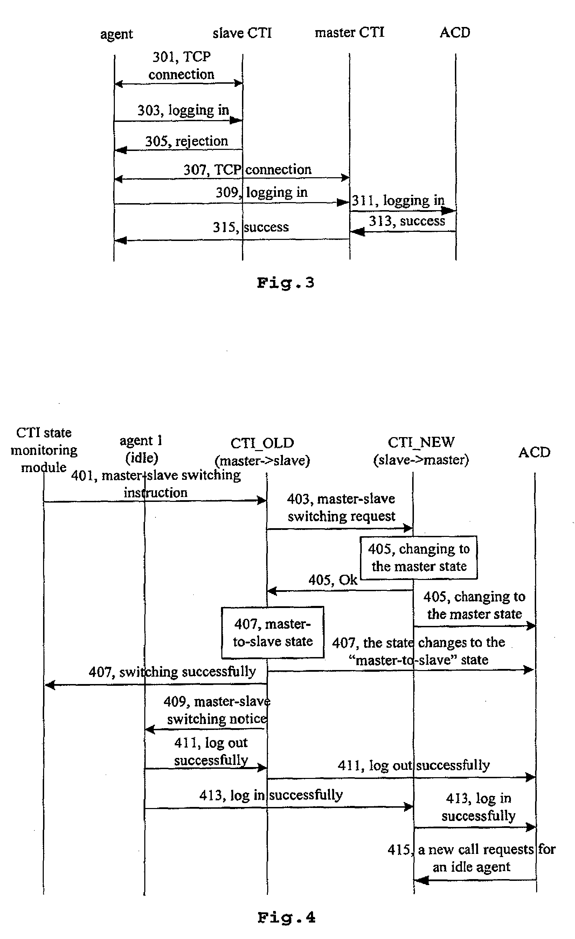

In the above, a CTI equipment started early is the master CTI equipment, while a CTI equipment started later is the slave equipment, agents need to log in the master CTI equipment; and since the agents can not judge which one is the master CTI equipment, the agents can choose any one to log in. Only the master or independent operation CTI equipment allows the agents to log in, thus the slave CTI equipment responds a refusal logging-in message after receiving a logging-in request from the agent. The agent can acquire that the currently logging-in CTI equipment is the slave CTI according to the message, and then select the other IP address to log in, so as to log in the master CTI equipment and the automatic call distributor successfully. The automatic call distributor records the CTI equipment to which the agent belongs according to the sender of the logging-in message. Reference is made to Fig.3 for details.

Fig. 3 is a flow chart of logging-in by the agent according to a preferred embodiment of the present invention. As shown in Fig. 3, the logging-in of the agent according to the preferred embodiment of the present invention mainly comprises the following processes (Step S301 to Step S315).

Step S301, the agent establishes a connection to the slave CTI equipment firstly.

Step S303, the agent sends the logging-in request to the slave CTI equipment.

Step S305, the slave CTI equipment returns the refusal logging-in response to the agent.

Step S307, the agent establishes a connection to the master CTI equipment.

Step S309, the agent sends the logging-in request to the master CTI equipment and then logs in the master CTI equipment.

Step S311, the master CTI equipment sends logging-in information to the automatic call distributor (ACD).

Step S313, the automatic call distributor records the CTI equipment to which the agent belongs according to the above sender of the logging-in information, and transmits a connection establishing success response to the master CTI equipment.

Step S315, the master CTI equipment returns the connection establishing success response to the agent.

After the connection between the master CTI equipment and the agent is established, the slave CTI equipment can be first upgraded when it is necessary to upgrade the CTI equipments.

Step S203, when the master CTI equipment is upgraded, one or more agents which are in the idle state log out from the master CTI equipment and log in the slave CTI equipment which has been upgraded.

Step S205 , one or more agents which are in a non-idle state keep connection with the master CTI equipment, log out from the master CTI equipment after changing to the idle state, and then log in the slave CTI equipment which has been upgraded.

Preferably, when the CTI equipment is upgraded, the master CTI equipment and the slave CTI equipment detect the operation state of each other every predefined time, wherein the operation states comprise: the master state, the slave state, and the master-to-slave state.

Preferably, the CTI state monitoring unit monitors in real time the operation states of the master CTI equipment and the slave CTI equipment when the CTI equipment is upgraded.

Preferably, before one or more agents in the idle state, the following processes may also be comprised.
(1) The master CTI equipment receives an operation state switching instruction from the CTI state monitoring unit.
(2) The master CTI equipment transmits the operation state switching instruction to the slave CTI equipment.
(3) The slave CTI equipment switches the operation state thereof from the slave state to the master state.
(4) The master CTI equipment switches the operation state thereof from the master state to the master-to-slave state after receiving the switching success response from the slave CTI equipment.

Preferably, after one or more agents logging out from the master CTI equipment, and logging in the slave equipment which has been upgraded, the following processes may also be comprised: the master CTI equipment switching the operation state thereof from the master-to-slave state to the slave state.

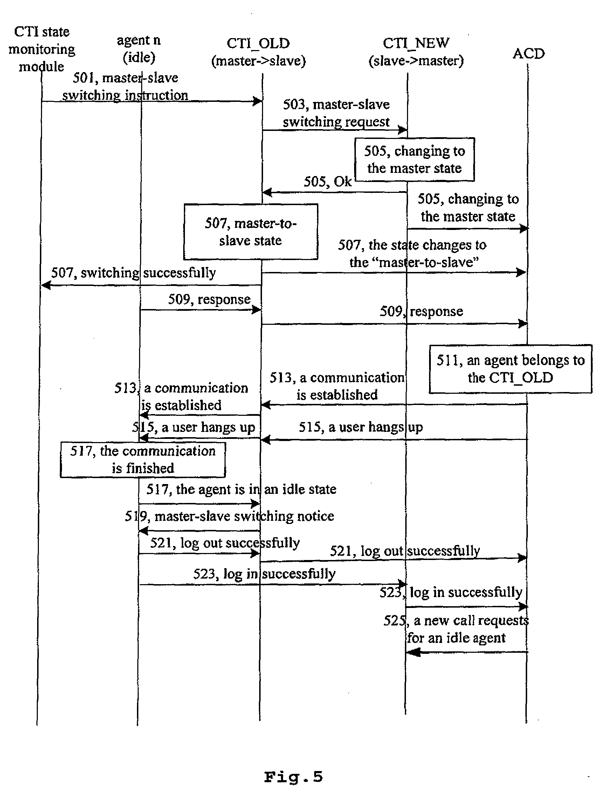

In the process of implementation, reference is made to Fig.4 or Fig.5 for the upgrading process of the computer telecommunication integration equipment.

Fig.4 is a flow chart of the upgrade of a computer telecommunication integration equipment when an agent is in an idle state according to a preferred embodiment of the present invention. As shown in Fig.4, the flow mainly comprises the following processes (Step S401-Step S415).

Step S401, a master CTI equipment which has not been upgraded (i.e., CTI_OLD) receives a master-slave switching instruction from a CTI state monitoring unit.

Step S403, after receiving the master-slave switching instruction, the CTI_OLD first sends a switching request to a slave CTI equipment which has not been (i.e., CTI_NEW).

Step S405, after receiving the master-slave switching request, the CTI_NEW switches to a master state immediately, responses a switching success to the CTI_OLD, and then informs an automatic call distributor that it has switched to the master state.

Step S407, the CTI_OLD receives a normal response from the CTI_NEW, switches to an intermediate state of "master-to-slave", and informs the automatic call distributor of the state change. The CTI_OLD informs a CTI state monitoring unit that the switching operation is successful.

Step S409, the CTI_OLD determines that agent 1 is in an idle state at present, and sends a master-slave switching notice message to the agent 1 immediately.

Step S411, the agent 1 logs out from the CTI_OLD, and sends a logging-out message to the ACD for being recorded.

Step S413, the agent 1 logs in the CTI_NEW, and sends a logging-in message to the ACD for being recorded.

Step S415, when a new call is coming, a selecting agent request message of the automatic call distributor is only sent to the current master CTI equipment (i.e., CTI_NEW), thus the agent 1 can be selected, so as to turn to a subsequent normal call.

A method for upgrading a computer integration equipment is provided by means of the above embodiment. Problems in the related art, only one CTI server is operated at the same time when the CTI equipment is upgraded, and a call cannot be connected when the agent is in the non-idle state, can be solved, so that the call and the communication of the user will not be affected when the CTI equipment is upgraded, which can improve the service quality for customers and user experience.

Fig.5 is a flow chart of the upgrade of a computer telecommunication integration equipment when the agent is in a non-idle state according to a preferred embodiment of the present invention. As shown in fig.5, the flow mainly comprises the following processes (Step S501-Step S525).

Step S501, a CTI_OLD receives a master-slave switching instruction from a CTI state monitoring unit.

Step S503, the CTI_OLD first sends a switching request to a CTI_NEW after receiving the master-slave switching instruction.

Step S505, after receiving the master-slave switching request, the CTI_NEW switches to a master state immediately, responses to the CTI_OLD a switching success, and then informs a automatic call distributor that it has switched to the master state.

Step S507, the CTI_OLD receives a normal response from the CTI_NEW, switches to an intermediate state of "master-to-slave", and informs the automatic call distributor of state change. The CTI_OLD informs a CTI state monitoring unit that the switching operation is successful.

Step S509, the CTI_OLD determines that agent n is in a non-idle state at present (for example, a ringing state), then keeps connecting with the agent n, and the communication between the agent n and a user is realized.

Step S511, the agent n sends a reply message to the ACD via the CTI_OLD.

Step S513, the ACD records that the agent n belongs to the CTI_OLD, and a communication establishing response is returned to the agent n via the CTI_OLD.

Step S515, until the communication is finished and the user hangs up, the ACD sends the message to the agent n via the CTI_OLD.

Step S517, the agent n is in the idle state when the communication is finished, and the message is sent to CTI_OLD.

Step S519, the CTI_OLD determines that the agent n is in the idle state at present, and sends a master-slave switching notice message to the agent n immediately.

Step S521, the agent n logs out from the CTI_OLD, and sends a logging-out message to the ACD for being recorded.

Step S523, the agent n logs in the CTI_NEW, and sends a logging-in message to the ACD for being recorded.

Step S525, when a new call is coming, a selecting agent request message of the automatic call distributor is only sent to the current master CTI equipment (i.e., CTI_NEW), thus the agent n can be selected, so as to turn to a subsequent normal call.

### System Embodiment

A system for upgrading a computer integration equipment is also provided according to an embodiment of the present invention.

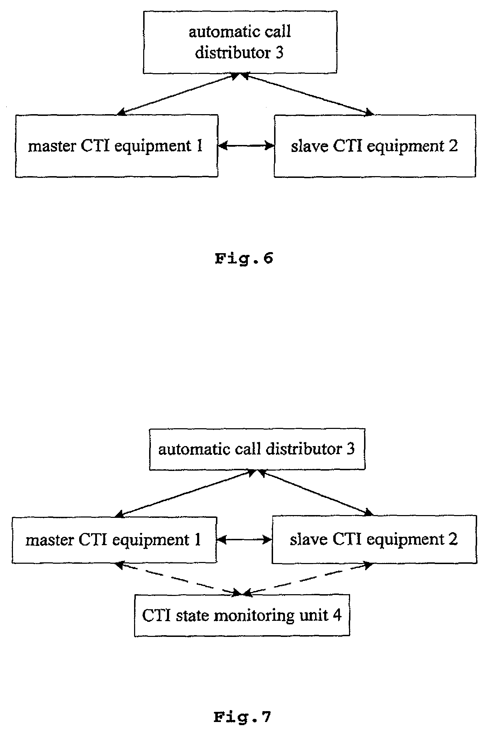

Fig.6 is an architecture view of the system for upgrading the computer integration equipment according to the embodiment of the present invention, and Fig. 7 is an architecture view of the system for upgrading the computer integration equipment according to a preferred embodiment of the present invention. As shown in Fig.6, the system for upgrading the computer integration equipment according to the embodiment of the present invention comprises: a master CTI equipment 1, a slave CTI equipment 2 and an automatic call distributor 3. The following description is provided in combination with Fig.7.

The master CTI equipment 1 is configured to keep connected with one or more agents which are in a non-idle state, and disconnect with the one or more agents in a case that the one or more agents are in an idle state.

Preferably, the master CTI equipment is also configured to receive a connection establishing request from the one or more agents, and establish connections with the one or more agents, wherein the connection establishing request carries a first IP address information of the one or more agents, and the master CTI equipment is started earlier than the slave CTI equipment.

The slave CTI equipment 2, connected with the master CTI equipment 1, is configured to establish connections with the one or more agents in the case that the one or more agents are in the idle state.

The automatic call distributor 3, connected with the master CTI equipment 1 and the slave CTI equipment 2, is configured to connect a new incoming call to one or more agents connected with the slave CTI equipment, wherein the slave CTI equipment has been upgraded.

Preferably, the first CTI equipment 1 and the slave CTI equipment 2 are also configured to detect an operation state of each other based on a predefined time, wherein the operation state comprises: a master state, a slave state, or a master-to-slave state.

Preferably, as shown in Fig.7, the system may also comprises: a CTI state monitoring unit 4, connected with the master CTI equipment 1 or the slave CTI equipment 2, and configured to monitor in real time operation states of the master CTI equipment and the slave CTI equipment.

Preferably, the CTI state monitoring unit 4 is also configured to control the master CTI equipment and the slave CTI equipment so as to switch the operation states.

The operation process of the above units combined with each other can be referred to the description in Fig. 1 to Fig.4, and it is not necessary to repeat the details here.

A system for upgrading a computer integration equipment is provided by means of the above embodiment. The upgrade of the CTI equipment can be realized effectively no matter the agents are in the non-idle state or in the idle state, the call connection between the agent and the user will not be affected, and customer satisfaction of a customer service platform can be improved.

To sum up, in the solution for upgrading a computer integration equipment provided by the above embodiments of the present invention, master-slave redundant dual-CTI equipments are configuring in the NGCC system, when the CTI equipment needs to be upgraded, the connection between the master CTI equipment and one or more agents which are in the non-idle state is kept; the connection between the master CTI equipment and one or more agents in the case is disconnected when the one or more agents are in the idle state, the connection between one or more agents and the upgraded slave CTI equipment is established; the master CTI equipment is replaced by the slave CTI equipment which changes to the master state, and the master CTI equipment is changed to the slave state. The upgrade of the CTI equipment can be realized effectively no matter the agents are in the non-idle state or in the idle state, the call connection between the agent and the user will not be affected, and the customer satisfaction of the customer service platform and user experience can be improved, thus the solution has a bright future in application.

## Claims

1. A method for upgrading a computer telecommunication integration equipment, comprising:
a master computer telecommunication integration (CTI) equipment and a slave CTI equipment registering respectively to an automatic call distributor;
when the master CTI equipment is upgraded, one or more agents which are in an idle state logging out from the master CTI equipment, and logging in the slave CTI equipment which has been upgraded; and
one or more agent which are in a non-idle state keeping connected with the master CTI equipment, logging out from the master CTI equipment after changing to the idle state, and logging in the slave CTI equipment which has been upgraded.

2. The method according to Claim 1, **characterized in that**
at least one of IP addresses and port numbers comprised in the master CTI equipment and the slave CTI equipment differs from each other.

3. The method according to Claim 2, **characterized in that** when the master CTI equipment and the slave CTI equipment have different IP addresses, the method further comprises:
the one or more agents choosing at least one of two pre-configured IP addresses to log in;
the slave CTI equipment rejecting to establish a connection with the one or more agents according to the IP address; and
the master CTI equipment establishing a connection with the one or more agents according to the IP address.

4. The method according to any one of Claims 1 to 3, **characterized in that** when the CTI equipment is upgraded, the method further comprises:
the master CTI equipment and the slave CTI equipment detecting an operation state of each other based on a predefined time, wherein the operation state comprises: a master state, a slave state, or a master-to-slave state.

5. The method according to Claim 4, **characterized in that** when the CTI equipment is upgraded, the method comprises:
a CTI state monitoring unit monitoring in real time the operation states of the master CTI equipment and the slave CTI equipment, and controlling the master CTI equipment and the slave CTI equipment so as to switch the operation states.

6. A system for upgrading a computer integration equipment, wherein when a computer telecommunication integration (CTI) equipment is upgraded, the system comprises:
a master CTI equipment (1), configured to keep connected with one or more agents which are in a non-idle state, and disconnect with the one or more agents in a case that the one or more agents are in an idle state;
a slave CTI equipment (2), configured to establish connections with the one or more agents in the case that the one or more agents are in the idle state; and
an automatic call distributor (3), configured to connect a new incoming call to one or more agents connected with the slave CTI equipment (2), wherein the slave CTI (2) equipment has been upgraded.

7. The system according to Claim 6, **characterized in that** the master CTI equipment (1) is further configured to receive a connection establishing request from the one or more agents, and establish connections with the one or more agents, wherein the connection establishing request carries master IP address information of the one or more agents, and the master CTI (1) equipment is started earlier than the slave CTI equipment (2).

8. The system according to Claim 6 or 7, **characterized in that**
the master CTI equipment (1) and the slave CTI equipment (2) are also configured to detect an operation state of each other based on a predefined time, wherein the operation state comprises: a master state, a slave state, or a master-to-slave state.

9. The system according to Claim 8, **characterized in that** the system further comprises:
a CTI state monitoring unit (4), configured to monitor in real time the operation states of the master CTI equipment (1) and the slave CTI equipment (2).

10. The system according to Claim 9, **characterized in that**
the CTI state monitoring unit (4) is also configured to control the master CTI (1) equipment and the slave CTI (2) equipment so as to switch the operation states.

## Patentansprüche

1. Verfahren zum Aufrüsten eines Computertelekommunikationsintegrationsgeräts, aufweisend:
ein Master-Computertelekommunikationsintegrations (CTI)-Gerät und ein Slave-CTI-Gerät, welche sich jeweils bei einem automatischen Anrufverteiler registrieren;
wenn das Master-CTI-Gerät aufgerüstet ist, melden sich ein oder mehrere Agent(en), welche in einem Ruhezustand sind, vom Master-CTI-Gerät ab und melden sich beim Slave-CTI-Gerät, welches aufgerüstet wurde, an; und
ein oder mehrere Agent(en), welche in einem Nicht-Ruhezustand sind, bleiben mit dem Master-CTI-Gerät verbunden, melden sich vom Master-CTI-Gerät nach Wechseln zum Ruhezustand ab und melden sich beim Slave-CTI-Gerät, welches aufgerüstet wurde, an.

2. Verfahren nach Anspruch 1, **dadurch gekennzeichnet, dass**
zumindest eine der im Master-CTI-Gerät und Slave-CTI-Gerät umfassten IP-Adressen und Portnummern voneinander abweichen.

3. Verfahren nach Anspruch 2, **dadurch gekennzeichnet, dass**, wenn das Master-CTI-Gerät und das Slave-CTI-Gerät verschiedene IP-Adressen haben, das Verfahren des Weiteren folgendes umfasst:
der eine oder die mehreren Agent (en) wählt (wählen) zumindest eine von zwei voreingestellten IP-Adressen zum Anmelden;
das Slave-CTI-Gerät lehnt eine Errichtung einer Verbindung mit dem einen oder den mehreren Agenten entsprechend der IP-Adresse ab; und
das Master-CTI-Gerät errichtet eine Verbindung mit dem einen oder den mehreren Agenten entsprechend der IP-Adresse.

4. Verfahren nach einem der Ansprüche 1 bis 3, **dadurch gekennzeichnet, dass**, wenn das-CTI-Gerät aufgerüstet ist, das Verfahren des Weiteren folgendes umfasst:
das Master-CTI-Gerät und das Slave-CTI-Gerät erfassen einen Betriebszustand voneinander basierend auf einer vorbestimmten Zeit, wobei der Betriebszustand folgendes umfasst:
einen Master-Zustand, einen Slave-Zustand oder einen Master-zu-Slave-Zustand.

5. Verfahren nach Anspruch 4, **dadurch gekennzeichnet, dass**, wenn das-CTI-Gerät aufgerüstet ist, das Verfahren folgendes umfasst:
eine CTI-Zustandsüberwachungseinheit, welche in Echtzeit die Betriebszustände des Master-CTI-Geräts und des Slave-CTI-Geräts überwacht und das Master-CTI-Gerät und das Slave-CTI-Gerät steuert, um die Betriebszustände umzuschalten.

6. System zum Aufrüsten eines Computerintegrationsgeräts, wobei, wenn ein Computertelekommunikationsintegrations(CTI)-Gerät aufgerüstet ist, das System folgendes umfasst:
ein Master-CTI-Gerät (1), das eingestellt ist, mit einem oder mehreren Agenten verbunden zu bleiben, welche in einem Nicht-Ruhezustand sind, und sich von dem einen oder den mehreren Agenten dann zu trennen, wenn der eine oder die mehreren Agent(en) in einem Ruhezustand ist (sind);
ein Slave-CTI-Gerät (2), das eingestellt ist, Verbindungen mit dem einem oder den mehreren Agenten zu errichten, wenn der eine oder die mehreren Agent(en) im Ruhezustand ist (sind); und
einen automatischen Anrufverteiler (3), der eingestellt ist, einen neuen eingehenden Anruf mit einem oder mehreren Agenten zu verbinden, der (die) mit dem Slave-CTI-Gerät (2) verbunden ist (sind), wobei das Slave-CTI (2)-Gerät aufgerüstet wurde.

7. System nach Anspruch 6, **dadurch gekennzeichnet, dass**
das Master-CTI-Gerät (1) des Weiteren eingestellt ist, eine Verbindungserrichtungsanfrage von dem einen oder den mehreren Agenten zu empfangen und Verbindungen mit dem einen oder den mehreren Agent(en) zu errichten, wobei die Verbindungserrichtungsanfrage Master-IP-Adressinformationen des einen oder der mehreren Agenten trägt und das Master-CTI (1)-Gerät früher als das Slave-CTI-Gerät (2) gestartet wird.

8. System nach Anspruch 6 oder 7, **dadurch gekennzeichnet, dass**
das Master-CTI-Gerät (1) und das Slave-CTI-Gerät (2) auch eingestellt sind, einen Betriebszustand voneinander basierend auf einer vorbestimmten Zeit zu erfassen, wobei der Betriebszustand folgendes umfasst: einen Master-Zustand, einen Slave-Zustand oder einen Master-zu-Slave-Zustand.

9. System nach Anspruch 8, **dadurch gekennzeichnet, dass** das System des Weiteren folgendes umfasst:
eine CTI-Zustandsüberwachungseinheit (4), die eingestellt ist, in Echtzeit die Betriebszustände des Master-CTI-Geräts (1) und des Slave-CTI-Geräts (2) zu überwachen.

10. System nach Anspruch 9, **dadurch gekennzeichnet, dass**
die CTI-Zustandsüberwachungseinheit (4) auch eingestellt ist, das Master-CTI-Gerät (1) und das Slave-CTI-Gerät (2) zu steuern, um die Betriebszustände umzuschalten.

## Revendications

1. Procédé de mise à niveau d'un équipement de couplage téléphonie-informatique comprenant le fait que :
un équipement de couplage téléphonie-informatique (CTI) maître et un équipement CTI esclave s'enregistrent respectivement auprès d'un distributeur automatique d'appels ;
lorsque l'équipement CTI maître est mis à niveau, un ou plusieurs agents qui se trouvent dans un état de veille ferment leur session avec l'équipement CTI maître, et ouvrent une session avec l'équipement CTI esclave qui a été mis à niveau ; et
un ou plusieurs agents qui se trouvent dans un état de non-veille restent connectés à l'équipement CTI maître, ferment leur session avec l'équipement CTI maître après être passé à l'état de veille, et ouvrent une session avec l'équipement CTI esclave qui a été mis à niveau.

2. Procédé selon la revendication 1, **caractérisé en ce que**
les adresses IP et/ou les numéros de ports compris dans l'équipement CTI maître et l'équipement CTI esclave sont différents entre eux.

3. Procédé selon la revendication 2, **caractérisé en ce que**, lorsque l'équipement CTI maître et l'équipement CTI esclave ont des adresses IP différentes, le procédé comprend en outre le fait que :
le ou les agents choisissent au moins l'une de deux adresses IP préconfigurées pour ouvrir une session ;
l'équipement CTI esclave rejette l'établissement d'une connexion avec le ou les agents en fonction de l'adresse IP ; et
l'équipement CTI maître établit une connexion avec le ou les agents en fonction des adresses IP.

4. Procédé selon l'une quelconque des revendications 1 à 3, **caractérisé en ce que**, lorsque l'équipement CTI est mis à niveau, le procédé comprend en outre le fait que :
l'équipement CTI maître et l'équipement CTI esclave détectent leurs états de fonctionnement mutuels à un moment prédéfini, l'état de fonctionnement comprenant :
un état maître, un état esclave ou un état maître-à-esclave.

5. Procédé selon la revendication 4, **caractérisé en ce que**, lorsque l'équipement CTI est mis à niveau, le procédé comprend le fait que :
une unité de surveillance d'état de CTI surveille en temps réel les états de fonctionnement de l'équipement CTI maître et de l'équipement CTI esclave, et commande l'équipement CTI maître et l'équipement CTI esclave de façon à commuter les états de fonctionnement.

6. Système de mise à niveau d'un équipement de couplage informatique, dans lequel, lorsqu'un équipement de couplage téléphonie-informatique (CTI) est mis à niveau, le système comprend :
un équipement CTI maître (1), configuré pour rester connecter avec un ou plusieurs agents qui sont dans un état de non-veille, et se déconnecter du ou des agents dans un cas où le ou les agents sont dans un état de veille ;
un équipement CTI esclave (2), configuré pour établir des connexions avec le ou les agents dans le cas où le ou les agents sont à l'état de veille ; et
un distributeur automatique d'appel (3), configuré pour connecter un nouvel appel entrant à un ou plusieurs agents connectés à l'équipement CTI esclave (2), l'équipement CTI esclave (2) ayant été mis à niveau.

7. Système selon la revendication 6, **caractérisé en ce que**
l'équipement CTI maître (1) est en outre configuré pour recevoir une demande d'établissement de connexion en provenance du ou des agents, et établir des connexions avec le ou les agents, la demande d'établissement de connexion transportant des informations d'adresse IP maîtresse du ou des agents, et l'équipement CTI maître (1) étant démarré plus tôt que l'équipement CTI esclave (2).

8. Système selon la revendication 6 ou 7, **caractérisé en ce que**
l'équipement CTI maître (1) et l'équipement CTI esclave (2) sont également configurés pour détecter leurs états de fonctionnement mutuels à un moment prédéfini, l'état de fonctionnement comprenant : un état maître, un état esclave, ou un état maître-à-esclave.

9. Système selon la revendication 8, **caractérisé en ce que** le système comprend en outre :
une unité de surveillance d'état de CTI (4), configurée pour surveiller en temps réel les états de fonctionnement de l'équipement CTI maître (1) et de l'équipement CTI esclave (2).

10. Système selon la revendication 9, **caractérisé en ce que** :
l'unité de surveillance d'état de CTI (4) est également configurée pour commander l'équipement CTI maître (1) et l'équipement CTI esclave (2) de façon à commuter les états de fonctionnement.
